# FASCICULE DE BREVET EUROPEEN

(11) **EP 2 936 248 B1**
(45) Date de publication et mention de la délivrance du brevet: **12.09.2018**
(21) Numéro de dépôt: 13827022.8
(22) Date de dépôt: 19.12.2013
(51) Int. Cl.: G03B 21/62, B32B 17/10

(54) **VITRAGE COMPRENANT UN SYSTEME A DIFFUSION LUMINEUSE VARIABLE UTILISE COMME ECRAN**
VERGLASUNG MIT EINEM VARIABLEN SYSTEM ZUR LICHTSTREUUNG, DIE ALS BILDSCHIRM BENUTZT WIRD
GLAZING COMPRISING A VARIABLE LIGHT DIFFUSION SYSTEM USED AS A SCREEN

(30) Priorité: 21.12.2012 FR 1262608
(43) Date de publication de la demande: 28.10.2015
(73) Titulaire: Saint-Gobain Glass France, 92400 Courbevoie (FR)
(72) Inventeur: GAYOUT, Patrick, F-93250 Villemomble (FR); MIMOUN, Emmanuel, 92100 BOULOGNE-BILLANCOURT (FR); ALLANO, Jean-Luc, F-95170 Deuil La Barre (FR)
(74) Mandataire: Saint-Gobain Recherche
(86) Numéro de dépôt international: PCT/FR2013/053187
(87) Numéro de publication internationale: WO 2014/096717

(56) Documents cités:
- WO-A1-01/90787
- FR-A1- 2 827 397
- FR-A1- 2 849 932
- US-A1- 2003 160 740
- US-A1- 2006 240 200
- US-A1- 2007 195 533
- US-A1- 2008 007 671

## Description

L'invention concerne le domaine des vitrages permettant la projection d'image, des vitrages occultant et des vitrages commutables entre un état diffusant et un état transparent.

L'invention concerne plus particulièrement un vitrage comprenant un système à diffusion lumineuse variable ainsi qu'un procédé de projection ou de rétroprojection dans lequel on utilise ledit vitrage comme écran.

Les vitrages connus comprennent les vitrages transparents standards qui donnent lieu à une transmission et une réflexion spéculaires d'un rayonnement incident sur le vitrage et les vitrages translucides qui donnent lieu à une transmission et une réflexion diffuse d'un rayonnement incident sur le vitrage.

De nombreuses tentatives ont été réalisées pour conférer à des vitrages standards transparents ou translucides des propriétés supplémentaires qui permettraient leur utilisation comme écran de projection ou de rétroprojection.

Un écran de projection comporte deux faces ou surfaces. Une face principale sur laquelle est projetée une image provenant d'une source lumineuse. Une face opposée sur laquelle apparaît éventuellement par transparence l'image projetée sur la face principale. Dans le cas d'une projection directe, la face principale, l'utilisateur ou spectateur et la source lumineuse sont positionnés dans la même région de l'espace.

Un écran de rétroprojection se différencie d'un écran de projection par le fait que l'utilisateur et la source lumineuse ne sont pas situés dans la même région de l'espace mais se trouvent de part et d'autre de l'écran. La rétroprojection implique de placer nécessairement le projecteur derrière le vitrage et donc de disposer d'un local à cet endroit. Cette configuration peut donc être contraignante par la place qu'elle requiert pour sa mise en oeuvre pour certaines applications. Par exemple, cette configuration est avantageuse en cas de projection sur des vitrines de magasin et désavantageuse en cas de projection dans une salle de réunion.

L'utilisation de vitrages standards transparents en tant qu'écran de projection n'est pas envisageable. En effet, ces vitrages ne présentant pas de propriété de réflexion diffuse, ils ne permettent pas de former des images sur l'une quelconque de leurs faces et renvoient des reflets nets à la manière de miroirs.

L'utilisation de vitrages standards translucides en tant qu'écran de projection ou de rétroprojection présente également des inconvénients. On connait par exemple des vitrages translucides comprenant une couche diffusante obtenue par dépôt d'une couche d'émail. De tels vitrages ne permettent pas de conserver la transparence du vitrage, c'est à dire une vision claire à travers le vitrage.

Une solution proposée pour améliorer les performances de vitrages utilisés comme écran de projection consiste à utiliser des vitrages commutables entre un état transparent et un état translucide. Ces vitrages sont basés sur l'utilisation de système à diffusion lumineuse variable comprenant des éléments actifs placés entre deux supports porteurs d'électrode. Les éléments actifs, quand le film est mis sous tension (Etat On ou transparent), s'orientent selon un axe privilégié, ce qui permet à un rayonnement d'être transmis et donc autorise la vision à travers le système à diffusion lumineuse variable. Hors tension (Etat Off ou diffusant), en l'absence d'alignement des éléments actifs, ledit système devient diffusant et empêche la vision.

De tels vitrages sont principalement utilisés actuellement comme écran pour la rétroprojection d'images à l'état diffusant car leurs propriétés ne leur permettent pas une utilisation convenable en tant qu'écran de projection. En effet, la projection directe d'image sur un vitrage commutable, par exemple à cristaux liquides, est de médiocre qualité de par les propriétés optiques inadaptées de ces vitrages telles que la faible réflexion diffuse. De plus, l'utilisation de tels vitrages comme écran de projection requiert en général des conditions d'éclairement idéales, c'est-à-dire une obscurité quasi-totale.

L'invention vise donc à pallier les inconvénients des vitrages connus de l'art antérieur en proposant un vitrage utilisable comme écran de projection ou de rétroprojection, ledit vitrage permettant notamment la projection directe d'images de bonne qualité, visibles avec un grand angle de vue, peu importe les conditions d'éclairement, tout en maintenant la possibilité du vitrage de commuter entre un état transparent et un état translucide.

L'invention permet également :
- de conserver une vision claire à l'état transparent,
- de renforcer la luminosité de l'image projetée,
- de renforcer ou d'améliorer le contraste de l'image projetée en projection directe,
- d'obtenir un excellent angle de vue, cette visualisation s'effectuant sans défauts optiques, c'est à dire avec une excellente netteté de l'image visualisée,
- de pouvoir contourner le phénomène de point chaud (« hot spot ») et de minimiser la gêne pouvant être occasionnée par la formation d'images parasites dues à la réflexion et la transmission de l'image projetée dans la pièce de projection.

Le demandeur a découvert qu'un vitrage associant un système à diffusion lumineuse variable et un substrat comportant un ensemble d'éléments discrets diffusants formant un motif permet de conserver la fonction commutable du vitrage tout en rendant possible l'utilisation de ce vitrage comme écran de projection ou de rétroprojection.

La présente invention concerne un vitrage comprenant deux surfaces principales externes (S1, S2) caractérisé en ce qu'il comporte :
- un système à diffusion lumineuse variable comprenant une couche à base d'éléments actifs, susceptible de commuter entre un état transparent et un état translucide,
- au moins deux substrats situés de chaque côté du système à diffusion lumineuse variable,
- au moins un substrat comportant un ensemble d'éléments diffusants discrets formant un motif M qui couvre une zone Z, l'ensemble d'éléments diffusants discrets couvrant au plus 40 %, de préférence au plus 30 %, et mieux au plus 25 % de l'aire de la zone Z couverte par le motif M.

Selon l'invention, on entend par « élément diffusant discret », un élément séparé d'un autre élément au moins par une partie de la surface du substrat non muni d'un élément. Les éléments présentent des propriétés de diffusion différentes de celles des autres parties de surface du substrat qui l'entourent.

Les éléments discrets diffusants peuvent avoir des formes variées, symétriques ou asymétriques notamment une forme choisie parmi des points, des disques, des carrés, des bandes ou des rectangles. La répartition des éléments discrets diffusants sur le substrat peut être périodique ou apériodique. Une répartition périodique signifie que les éléments discrets sont placés sur le substrat de manière ordonnée alors qu'une répartition apériodique signifie que les éléments discrets sont placés sur le substrat de manière aléatoire. Les motifs peuvent comprendre des réseaux de points, de disques ou de bandes. Une répartition apériodique des éléments permet d'éviter les effets de moiré dans certaines applications.

Les éléments discrets diffusants présentent par ordre de préférence croissant, une dimension latérale maximale comprise entre 1 µm et 5 mm, entre 10 µm et 1 mm, entre 100 µm et 800 µm, entre 300 µm et 500 µm. Une dimension latérale correspond à une corde du bord d'un élément distinct. La dimension latérale maximale correspond donc à la plus grande corde du bord d'un élément distinct. Dans le cas d'un disque, la dimension latérale maximale correspond au diamètre du disque.

Selon l'invention, on entend par « motif », une forme définie sur une partie de la surface du substrat comportant un ensemble d'éléments diffusants discrets correspondant à une zone Z résultant de la juxtaposition d'un ensemble d'éléments discrets diffusants et des parties du substrat séparant lesdits éléments discrets. La zone Z correspond à la plus petite surface qui englobe tous les éléments discrets d'un ensemble. Un motif couvrant une zone Z comprend donc deux parties. Une partie de la surface du motif comprend les éléments discrets et donc présente des propriétés diffusantes particulières. L'autre partie de la surface du motif ne comprend pas lesdits éléments discrets et présente les propriétés de réflexion et de transmission du substrat choisi de préférence transparent.

Les motifs peuvent avoir toute forme et être plus au moins grands. Les motifs peuvent recouvrir tout ou partie de la surface d'un substrat. Lorsque le motif correspond à une partie de la surface du substrat, cette partie peut représenter quelques cm² à plusieurs m².

Le motif permet une sensation de transparence bien qu'il soit visible lorsque le système à diffusion lumineuse variable est à l'état transparent. Cette sensation de transparence est obtenue en optimisant la forme et les dimensions du motif ou des éléments discrets diffusants mais surtout en optimisant les proportions de surface du substrat recouvertes par lesdits éléments diffusants par rapport à la surface du motif. Ces proportions doivent être suffisantes pour conférer des propriétés de diffusion mais suffisamment faibles ou peu denses pour assurer une sensation de transparence et donc permettre la vision à travers le vitrage.

Lorsque le vitrage est à l'état transparent, c'est-à-dire lorsque le système à diffusion lumineuse variable est à l'état transparent, le vitrage de l'invention demeure transparent car une vision claire à travers est possible. Lorsque le vitrage est à l'état diffusant, c'est-à-dire lorsque le système à diffusion lumineuse variable est à l'état diffusant, le vitrage est occultant. L'association d'un système à diffusion lumineuse variable et d'un substrat comportant un ensemble d'éléments discrets diffusants formant un motif permet de conserver avantageusement la propriété de pouvoir commuter entre un état transparent et un état translucide.

De manière surprenante, le vitrage de l'invention présente une réflexion diffuse élevée lorsque le système à diffusion lumineuse variable est à l'état diffusant. La combinaison des propriétés en réflexion du système à diffusion lumineuse variable à l'état diffusant et du substrat comportant un ensemble d'éléments discrets diffusants formant un motif permet d'utiliser efficacement le vitrage comme écran de projection et d'obtenir des images projetées d'excellente qualité. Cette coopération synergique permet notamment l'obtention :
- d'une excellente luminosité des images projetées et d'un contraste élevé aussi bien dans la pénombre que dans une pièce éclairée,
- d'excellents angles de vue et par conséquent une bonne vision et lisibilité de l'image même en l'observant avec un angle de 180°.

En effet, un observateur ou spectateur situé à un angle d'environ -90° ou +90° est capable de voir distinctement une image projetée ou de lire un texte projeté sur le vitrage de l'invention.

De plus, la présence du substrat comprenant un motif formé d'éléments discrets diffusants favorise la réflexion diffuse même lorsque le système à diffusion lumineuse variable est à l'état transparent permettant ainsi la projection directe d'une image sur l'un quelconque des côtés du vitrage.

Enfin, la rétroprojection d'image demeure possible que le vitrage soit à l'état translucide ou à l'état transparent. En effet, à l'état transparent, la rétroprojection est possible grâce à la présence du substrat comportant un ensemble d'éléments discrets diffusants formant un motif. A l'état translucide, la rétroprojection est également possible grâce à la présence de ce substrat combinée à la présence du système à diffusion lumineuse variable.

Les propriétés du vitrage, notamment le très large angle de vue lorsqu'il est utilisé comme écran de projection ou de rétroprojection, permettent de ne pas imposer de contrainte particulière sur la position du projecteur. Par exemple, le projecteur peut être placé de manière à ce que la réflexion spéculaire et/ou la transmission non diffuse de la lampe du projecteur ne soit pas visible pour les observateurs, sans dégrader la qualité de la projection. On contourne ainsi le phénomène du point chaud.

Cette même propriété permet de minimiser la gêne pouvant être occasionnée par la formation d'images parasites. Les images parasites sont dues à :
- la réflexion spéculaire de la lumière projetée sur le vitrage, une image pouvant alors se former sur une autre surface de la pièce de projection,
- la transmission non diffuse de la lumière projetée à travers le vitrage, une image pouvant alors se former sur une autre surface de la pièce de projection.

Cette gêne pouvant être minimisée en plaçant le projecteur de façon à ce que ces images parasites soient formées à un endroit ne gênant pas l'observateur, par exemple sur le sol.

La solution de l'invention constitue une amélioration des vitrages existants pour une utilisation en tant qu'écran de projection d'un point vue technique mais également économique de par le faible surcout généré par la présence du substrat comportant un ensemble d'éléments discrets diffusants formant un motif.

Le vitrage de l'invention conserve sa propriété de commuter entre un état transparent et un état translucide tout en permettant la projection et la rétroprojection d'image de bonne qualité, dans la pénombre ou dans des environnements éclairés, avec de bons angles de vue, que le système à diffusion lumineuse variable soit à l'état diffusant ou à l'état transparent. Ces propriétés sont obtenues sans nuire à la transparence du vitrage lorsque le système à diffusion lumineuse variable est à l'état transparent. Le vitrage de l'invention présente donc de nombreuses fonctionnalités.

Dans un mode de réalisation avantageux, la face comportant le motif du substrat comportant un ensemble d'éléments diffusants discrets est placée à l'intérieur du vitrage et mieux au plus près du système à diffusion lumineuse variable. Le demandeur a découvert que plus les éléments discrets diffusants sont proches de la couche à base d'éléments actifs, meilleures sont les propriétés de l'écran de projection. En effet, cela permet :
- de protéger le motif notamment lorsque celui-ci comprend une couche diffusante discontinue telle qu'une couche discontinue obtenue par sérigraphie d'un émail,
- d'obtenir un vitrage comprenant une surface principale externe lisse constituée par l'autre face lisse du substrat comportant un ensemble d'éléments diffusants discrets,
- de rapprocher les éléments discrets diffusants et la couche de cristaux liquides, c'est-à-dire les matériaux susceptibles de diffuser la lumière, et ainsi minimiser le flou dû à la formation d'une double image.

La fixation du substrat comportant un ensemble d'éléments diffusants discrets peut être réalisée par exemple, par feuilletage ou par assemblage en double vitrage.

L'invention concerne également un procédé de projection ou de rétroprojection selon lequel on dispose d'un vitrage comprenant deux surfaces principales externes utilisé comme écran de projection ou de rétroprojection et d'un projecteur, ledit procédé consistant à projeter grâce au projecteur des images visibles par des spectateurs sur l'un des côtés du vitrage.

Suivant des modes particuliers de réalisation, le vitrage selon l'invention comporte en outre l'une ou plusieurs des caractéristiques techniques ci-dessous, prise(s) isolément ou suivant toutes les combinaisons techniquement possibles :
- le substrat comportant un ensemble d'éléments diffusants discrets et au moins un des substrats situés de chaque côté du système à diffusion lumineuse variable sont assemblés par feuilletage,
- le substrat comportant un ensemble d'éléments diffusants discrets et au moins un des substrats situés de chaque côté du système à diffusion lumineuse variable sont assemblés en double vitrage,
- les substrats assemblés en double vitrage ont leurs faces internes espacées de 10 à 20 mm,
- le substrat comportant un ensemble d'éléments diffusants discrets comprend une face interne et une face externe, l'ensemble d'éléments diffusants discrets étant placé sur la face interne dudit substrat,
- le substrat comportant un ensemble d'éléments diffusants discrets présente une face externe lisse,
- une des surfaces principale externe du vitrage est confondue avec la face externe du substrat comportant un ensemble d'éléments diffusants discrets.

Le motif formé des éléments discrets diffusants peut être :
- un film plastique diffusant discontinu, les éléments discrets diffusants étant alors constitués de parties de film diffusant,
- une couche diffusante discontinue déposée par des techniques variées d'impression telles que le masquage ou la sérigraphie, la tampographie, le roll-coating, les éléments discrets diffusants étant alors constitués des zones du substrat sur lesquelles la couche diffusante a été déposée,
- une texturation discontinue réalisée sur une partie de la surface du substrat, les éléments discrets diffusants étant alors constitués des parties de la surface texturée.

De manière avantageuse, le substrat comportant un ensemble d'éléments diffusants discrets comprend sur les parties de la surface comprenant lesdits éléments :
- un flou en transmission mesuré grâce au hazemeter HazeGard plus de BYK, supérieure à 90 %, de préférence supérieur à 95 %,
- une réflexion lumineuse mesurée selon la norme ASTM D1003 supérieure à 50 %, de préférence supérieur à 80 %.

Les motifs peuvent être obtenus par application d'un film plastique diffusant découpé selon un motif souhaité et déposé sur le substrat. L'adhésion dudit film au substrat peut être réalisée par toutes techniques connues et notamment par collage ou par feuilletage.

Les motifs peuvent être obtenus par texturation d'une partie de la surface du substrat. Dans ce cas, un masque est appliqué sur l'une des surfaces du substrat suivie d'une étape d'attaque chimique ou mécanique de ladite surface au travers dudit masque.

Les motifs sont préférentiellement obtenus par dépôt d'une couche diffusante discontinue sur l'une des surfaces du substrat. L'utilisation de procédé de masquage ou de la sérigraphie permet l'obtention de motifs décoratifs multiples de formes complexes et variées. La couche diffusante discontinue est de préférence obtenue par sérigraphie.

La couche diffusante peut comprendre des éléments diffusants, de préférence des particules minérales, dispersés dans une matrice.

La matrice comprend des composés minéraux ou organiques. Les composés minéraux peuvent être choisis notamment parmi les silicates de potassium, les silicates de sodium, les silicates de lithium, les phosphates d'aluminium et les frittes de verre. Les composés organiques peuvent être choisis parmi les polymères de type polyalcool vinylique, les résines thermodurcissables et les acryliques.

Les particules minérales comprennent au moins un composé choisi parmi les oxydes, les nitrures, les carbures, les carbonates, les sulfates ou les borures. Les particules peuvent notamment être :
- des oxydes choisis parmi des oxydes d'éléments choisis parmi l'aluminium, le silicium, le cérium, le titane et le zirconium tels que l'oxyde d'aluminium, l'oxyde de silicium, l'oxyde de cérium, l'oxyde de titane et l'oxyde de zirconium,
- des nitrures tels que le nitrure de silicium,
- des carbures choisis parmi le carbure de silicium,
- des carbonates tels que le carbonate de calcium,
- des sulfates tel que le sulfate baryum, et
- des borures, notamment le borure de zirconium.

A titre de particules minérales, on peut citer les cristaux de zircon correspondant à des silicates de zirconium (ZrSiO₄) ou de baddeleyite correspondant à des oxydes de zirconium. Les oxydes sont préférés et plus particulièrement l'oxyde d'aluminium, avantageusement α-Al₂O₃ (corindon).

Les particules minérales sont choisies parmi des composés ayant un indice optique compris entre 1,55 et 2,9.

Les particules minérales présentent un diamètre moyen compris entre 0,3 et 2 µm. De préférence, les particules minérales sont dispersées dans la matrice sous forme d'agrégats de plusieurs particules minérales dont la dimension est comprise entre 0,5 et 20 µm, de préférence inférieure à 5 µm.

Le choix d'une matrice comprenant des composés organiques ou minéraux est fonction des exigences des applications. Par exemple, une matrice comprenant des composés minéraux permet d'obtenir une couche qui résiste à des températures élevées alors qu'une matrice comprenant des composés organiques permet de simplifier la réalisation de ladite couche grâce à une réticulation à froid.

Avantageusement, la matrice présente un indice de réfraction différent de celui des éléments diffusants. La différence entre les deux indices de réfraction de la matrice et des éléments diffusants est de préférence d'au moins 0,05, mieux d'au moins 0,10 ou d'au moins 0,20 et encore mieux d'au moins 0,50.

Le choix des particules minérales sera fonction de la nature chimique de la matrice et du procédé d'obtention de la couche diffusante et plus particulièrement de la température de prise, durcissement, réticulation ou cuisson de la matrice. En effet, les particules minérales sont choisies de manière à ne pas se détériorer aux températures de traitement afin de rester sous forme de particules ou d'agrégats de particules.

Les propriétés de diffusion de la couche diffusante pourront être modulées dans une large gamme en faisant varier différents paramètres tels que la variation d'indice de réfraction entre la matrice et les éléments diffusants, la taille et la densité des éléments diffusants dans la couche diffusante.

Selon un mode de réalisation avantageux, la couche diffusante discontinue peut donc comprendre une couche d'émail comprenant des particules minérales dispersées dans une matrice. Une couche d'émail est obtenue lorsque la matrice est réalisée à partir de matières vitrifiables traitées à température élevée telles que des frittes de verre.

Un émail est une suspension contenant des matières vitrifiables finement broyées (parfois appelées flux vitreux) et des agents destinés à conférer certaines propriétés optiques telles que couleur, opacité, réflexion ou diffusion (aspect mat ou brillant). L'émail est destiné à être appliqué en couche sur un substrat, par des procédés tels que le « rideau » ou la sérigraphie, puis à être « cuit » afin de former, après évaporation du solvant et fusion des matières vitrifiables, une fine couche vitreuse.

Les matières vitrifiables entrant dans la composition de l'émail avant cuisson appelé ci-après pâte d'émail peuvent être des matières premières naturelles ou artificielles telles que le sable de quartz, les feldspaths, la néphéline, le calcaire, les frittes de verre. Les frittes de verre entrant dans la composition d'émaux sont très finement broyées de manière à pouvoir fondre et napper le substrat.

La couche diffusante discontinue est de préférence obtenue par sérigraphie d'un émail ou couche d'émail à base d'une fritte de verre sur substrat.

Une couche d'émail est obtenue à partir d'une pâte d'émail comprenant une fritte de verre, un milieu liant approprié et éventuellement des particules minérales ou des pigments.

Par « fritte », on entend une composition de matière vitrifiable sous forme d'une poudre à base d'oxydes. Les oxydes peuvent être choisis parmi les oxydes de silicium, d'aluminium, de bore, de zinc, de bismuth, de strontium, de lanthane, de sodium, de potassium, de calcium, de baryum, de lithium, de magnésium ou de zirconium. La fritte de verre peut comprendre en outre d'autres composés tels que du fluor. Les frittes de verre sont obtenues par broyage du verre à des granulométries de quelques microns (par exemple D50 = 2 microns).

La fritte de verre préférentiellement utilisée selon l'invention contient du zinc et du bore sous forme d'oxyde de zinc, d'oxyde de bore, de borosilicate de zinc, de borate de zinc et leurs mélanges.

Les frittes de verre convenant selon l'invention comprennent, par exemple en masse par rapport à la masse totale de la fritte de verre, les oxydes et composés suivants :
- 1 à 20 % de SiO₂,
- 0,05 à 2% Al₂O₃,
- 10 à 30 % B₂O₃,
- 1 à 20 % Na₂O,
- 0 à 2 % K₂O,
- 10 à 50 % ZnO,
- 0 à 60 % Bi₂O₃,
- 0,05 à 10 % ZrO₂,
- 0 à 5 % F.

Le milieu liant comprend des composés organiques, des solvants et des additifs permettant d'obtenir une pâte facilement applicable sous forme de couche. Les composés organiques du milieu liant sont en général éliminés lors de l'étape de cuisson.

Selon le mode préféré d'application par sérigraphie, les différents constituants sont assemblés lors d'un processus d'empâtage. Pour obtenir la pâte d'émail, on mélange la ou les frittes de verre c'est-à-dire les composés qui forment la matrice, les particules minérales et le milieu liant organique. La fritte de verre est préalablement finement broyée (D50 - 2 à 5 µm) notamment pour faciliter son passage dans les mailles d'un écran de sérigraphie. La fritte de verre et les éléments diffusants sont dispersés à haut cisaillement dans le milieu liant à l'aide d'un disperseur à disque. La dispersion peut être améliorée par l'emploi de broyeur tricylindre. Les composés organiques du milieu liant sont préférentiellement choisis pour leur faible tension de vapeur afin de ne pas sécher dans les écrans de sérigraphie. Les composés organiques sont des glycols, esters et alcools à température d'ébullition élevée de l'ordre de 200°C. Les rapports solides liquides sont choisis pour obtenir une pâte de viscosité élevée. Des additifs pourront être ajoutés afin d'obtenir une pâte dont les propriétés rhéofluidifiantes sont satisfaisantes pour permettre le transfert de la pâte de l'écran vers le substrat. Ces additifs peuvent être éthers cellulosiques ou des composés de type oxydes minéraux submicroniques.

Selon un mode de réalisation avantageux, la pâte d'émail est obtenue à partir d'une composition comprenant :
- de 10 à 80% en masse d'une fritte de verre, de préférence d'une fritte de verre contenant du bore et du zinc,
- de 5 à 35 % d'un pigment ou particules minérales, de préférence d'alumine,
- de 10 à 40% d'un milieu liant.

La sérigraphie est une technique d'impression bien connue qui utilise un écran de sérigraphie constitué d'un tissu sur lequel les motifs à imprimer sur le substrat sont reproduits et d'une racle permettant d'appliquer une force de cisaillement suffisante pour faire passer la pâte à travers les mailles de l'écran par les ouvertures correspondant au motif à imprimer et déposer ladite pâte sur le substrat.

La pâte d'émail peut être déposée selon une épaisseur comprise entre 1 et 100 microns.

Pour obtenir un substrat comprenant une couche diffusante discontinue à base d'émail, la composition sous forme de pâte est appliquée sur le substrat puis subit un traitement thermique à une température et pendant un temps suffisants pour permettre la fusion de la fritte et sa liaison avec les éléments diffusants.

La transmission lumineuse et les propriétés de diffusion des motifs imprimés peuvent être ajustées par modification de la teneur ou de la nature des éléments diffusants et/ou de la matrice.

Le vitrage comprend de préférence un système à diffusion lumineuse variable électrocommandable. Les éléments actifs sont des éléments dont l'orientation est modifiée par application d'un champ électrique ou magnétique. De préférence, les éléments actifs commutent de manière réversible d'un état translucide vers un état transparent par application d'un champ électrique, de préférence alternatif.

Selon l'invention, on entend par « état ON » l'état transparent du système à diffusion lumineuse variable lorsque le vitrage est sous tension et par « état OFF » l'état diffusant ou translucide du système à diffusion lumineuse variable quand le vitrage n'est plus sous tension.

Ces systèmes à diffusion lumineuse variable sont de préférence des systèmes à cristaux liquides. Dans ce cas, le système à diffusion lumineuse variable commutant entre un état transparent et un état translucide comprend une couche à base de cristaux liquides située entre deux électrodes. La couche à base de cristaux liquides comprend un mélange de cristaux liquides formant des micro-gouttelettes, sans orientations préférentielles entre elles, dispersées dans une matrice polymère. Le système à diffusion lumineuse variable est lui-même situé entre deux substrats éventuellement porteurs desdites électrodes.

Les cristaux liquides, quand le système à diffusion lumineuse variable est mis sous tension (Etat ON), s'orientent selon un axe privilégié, ce qui autorise la vision à travers la couche incorporant des gouttelettes de cristaux liquides. Hors tension (Etat OFF), en l'absence d'alignement dans les gouttelettes de cristaux liquides, le système à diffusion lumineuse variable devient diffusant et empêche la vision.

Selon l'invention, le terme « système à diffusion lumineuse variable » inclut la couche à base de cristaux liquides et les deux électrodes situées de chaque côté de la couche à base de cristaux liquides et le terme « vitrage » inclut au moins les substrats porteurs desdites électrodes et le système à diffusion lumineuse variable.

Les vitrages commutables entre un état transparent et un état diffusant actuellement disponibles dans le commerce comprennent un film fonctionnel constitué de deux supports porteurs d'électrode sous forme de feuilles plastiques encadrant une couche incorporant des gouttelettes de cristaux liquides, le tout feuilleté par l'intermédiaire d'intercalaires ou collé entre deux substrats de verre.

Le demandeur a développé des vitrages commutables comprenant des cristaux liquides n'utilisant pas la technologie des films fonctionnels. Ces vitrages commutables comprennent une couche incorporant des gouttelettes de cristaux liquides directement encapsulée entre deux substrats de préférence verriers et non comprise entre deux supports porteurs d'électrode sous forme de feuilles plastiques. L'ensemble constitué par les substrats et la couche incorporant des gouttelettes de cristaux liquides est scellé par l'intermédiaire d'un joint de scellement ou cordon de colle périphérique. Les demandes de brevet WO 2012/028823 et WO 2012/045973 décrivent de tels vitrages. L'utilisation de cette technique permet de fabriquer des vitrages moins chers en économisant sur les matériaux employés.

Le vitrage comprend un système à diffusion lumineuse variable comprenant une couche à base de cristaux liquides susceptible de commuter entre un état transparent et un état diffusant de préférence électrocommandable.

La couche à base de cristaux liquides a, par ordre de préférence croissant, une épaisseur de 3 à 50 µm, de 5 à 25 µm, de 10 à 20 µm ou de 12 à 17 µm.

Les microgouttelettes de cristaux liquides présentent, par ordre de préférence croissant, un diamètre moyen compris entre 0,25 µm et 5,00 µm, entre 0,25 µm et 3,00 µm, entre 1,00 et 2,50 µm, entre 0,50 et 2,00 µm ou entre 0,70 et 1,00 µm (bornes incluses).

La couche à base de cristaux liquide peut comprendre une matrice polymère dans lequel sont dispersés des cristaux liquides comme éléments actifs. Les cristaux liquides connus sous les termes de NCAP (« Nematic Curvilinear Aligned Phase »), PDLC (« Polymer-Dispersed Liquid Cristal »), CLC (« Cholesteric Liquid Cristal »), NPD-LCD (« Non-homogenous Polymer Dispersed Liquid Crystal Display ») peuvent être utilisés.

Les cristaux liquides sont de préférence nématiques à anisotropie diélectrique positive. Des exemples de cristaux liquides et de mélange de cristaux liquides convenant selon l'invention sont décrits notamment dans les brevets EP 0 564 869 et EP 0 598 086.

A titre de mélange de cristaux liquides convenant tout particulièrement selon l'invention, on peut utiliser le produit commercialisé par la société Merck sous la référence MDA-00-3506 comprenant un mélange de de 4-((4-éthyl-2,6-difluorophényl)-éthinyl)-4'-propylbiphényle et de 2-fluoro-4,4'-bis(trans-4-propylcyclohexyl)-biphényle.

La matrice polymère peut comprendre un polymère ou copolymère choisi parmi les polyéthers, les polyuréthanes, les alcools polyvinylique (PVA), les polyesters, les polyacrylates et polyméthacrylates.

De préférence, la couche à base de cristaux liquides est une couche PDLC « Polymer-Dispersed Liquid Cristal » comprenant une multitude de gouttelettes de cristaux liquides dispersées dans une matrice polymère. Les procédés de préparation des couches PDLC comprennent une étape de séparation de phase pour former les gouttelettes de cristaux liquides dispersées dans la matrice polymère.

Une couche à base de cristaux liquides peut être obtenue par préparation d'une composition précurseur comprenant un mélange de cristaux liquides et une composition photopolymérisable. Cette composition précurseur est appliquée sous forme de « couche » au contact de deux substrats porteurs d'électrode. Pendant la polymérisation ou réticulation par irradiation à la lumière UV de ladite composition précurseur, il se forme une matrice polymère dans laquelle les cristaux liquides sont incorporés sous formes de microgouttelettes. La couche diffusante est donc obtenue par une étape de séparation de phase induite par photopolymérisation radicalaire.

De préférence, la matrice polymère est obtenue à partir d'une composition photopolymérisable et comprend des composés susceptibles de polymériser ou de réticuler par voie radicalaire sous l'action d'un rayonnement de préférence UV. Cette composition photopolymérisable comprend des monomères, oligomères et/ou prépolymères et un initiateur de polymérisation.

Selon un mode de réalisation avantageux, la matrice polymère est obtenue à partir d'une composition photopolymérisable comprenant des composés vinyliques. Par « composé vinylique », on entend au sens de la présente invention un monomère, un oligomère, un pré-polymère, un polymère comprenant au moins une fonction vinyle CH₂=CH- qui, lorsqu'il est soumis aux conditions de photopolymérisation, donne un réseau polymère doté d'une structure solide. Selon l'invention, le terme composé vinylique inclut les composés acrylates et méthacrylates comprenant au moins une fonction (CH₂=CH-CO-O-) ou (CH₂=C(CH₃)-CO-O-).

La composition photopolymérisable selon l'invention comprend de préférence à titre de composés vinylique des composés acrylates et/ou méthacrylates (ci-après (méth)acrylates). Les composées (méth)acrylate utilisés selon l'invention peuvent être choisis parmi les (méth)acrylates monofonctionnels et polyfonctionnels tels que les (méth)acrylates mono-, di-, tri-, poly-fonctionnels. Des composés vinyliques convenant selon la présente invention sont par exemple décrits dans le brevet EP 0272 585 notamment des oligomères acrylates.

Avantageusement, la composition photopolymérisable comprend, en masse par rapport à la masse totale de la composition photopolymérisable, par ordre de préférence croissant, au moins 50 %, au moins 60 %, au moins 70 %, au moins 80 %, au moins 90 %, au moins 95 % de composés vinyliques.

Dans la mesure où aucun solvant n'est utilisé, la matrice polymère une fois réticulée comprendra donc au moins 50 % de polymère obtenu par polymérisation des composés vinyliques. De préférence, la matrice polymère comprend par ordre de préférence croissant, en masse par rapport à la masse totale de la matrice polymère, au moins 60 %, au moins 70 %, au moins 80 %, au moins 90 %, au moins 92 %, au moins 95 % de polymères obtenus par polymérisation des composés vinylique.

Selon un mode de réalisation, la composition photopolymérisable comprenant des composés vinyliques comprend, en masse par rapport à la masse totale de la composition photopolymérisable, par ordre de préférence croissant, au moins 50%, au moins 60%, au moins 70%, au moins 80%, au moins 90%, au moins 95% de composés acrylates et/ou de composés méthacrylates.

La composition photopolymérisable peut comprendre en outre 0,01 à 5% d'un photoinitateur en masse par rapport à la masse totale de la composition photopolymérisable. A titre de photoinitiateurs convenant selon l'invention, on peut citer 2,2-diméthoxy-1,2-diphényléthanone.

La composition polymérisable peut comporter d'autres co-monomères polymérisables tels que des mercaptans.

On peut citer comme exemple de composition photopolymérisable, une composition obtenue à partir du produit MXM 035 vendu par Nematel. Ce produit comprend :
- un mélange de deux monomères acrylates, l'éthylhexylacrylate et l'hexanediol diacrylate et d'oligomères acrylates,
- un mercaptan,
- un photoinitiateur.

D'autres exemples de compositions à base d'acrylates et de mercaptans sont décrits dans les brevets US 4,891,152, EP 0564869 et EP 0 598 086.

Selon un mode de réalisation avantageux, la couche à base de cristaux liquides est une couche PDLC satisfaisant les caractéristiques suivantes seules ou en combinaison :
- la matrice polymère est obtenue à partir d'une composition photopolymérisable comprenant des composés vinyliques, de préférence des composés acrylates ou des composés méthacrylates, et/ou
- les proportions en masse du mélange de cristaux liquides par rapport à la masse totale du mélange de cristaux liquides et de composition photopolymérisable sont comprises entre 40 et 70%, de préférence entre 50 et 65 %, et/ou
- la couche PDLC a une épaisseur comprise entre 10 et 30 µm, de préférence entre 10 et 20 µm, et/ou
- le diamètre moyen des gouttelettes de cristaux liquides dispersées dans la matrice polymère est compris entre 0,25 µm et 2,00 µm, de préférence entre 0,70 et 1,00 µm.

Une couche PDLC présentant la combinaison de ces caractéristiques présente un excellent pouvoir cachant. La dimension moyenne des gouttelettes et les proportions relatives en masse du mélange de cristaux liquides par rapport à la composition photopolymérisable peuvent être indirectement corrélées à la densité des gouttelettes dans la couche PDLC (en admettant que très peu de cristaux liquides sont dissous dans la matrice polymère).

La couche diffusante peut comprendre en outre des espaceurs. Les espaceurs peuvent être en verre tels que des billes de verre ou en matière plastique dure par exemple en polyméthacrylate de méthyle (PMMA) ou en polymère de divinylbenzène. Ces espaceurs sont de préférence transparents et de préférence présentent un indice optique sensiblement égal à l'indice de réfraction de la matrice polymère. Les espaceurs sont en matériau non-conducteur.

Un procédé d'encapsulation entre deux verres avec électrodes d'une couche diffusante comprenant des cristaux liquide dans un matériau polymère est décrit dans la demande WO 2012/045973.

Le système à diffusion lumineuse variable comprenant la couche à base d'élément actif, de préférence de cristaux liquides, peut s'étendre sur toute la surface du vitrage, ou sur au moins une partie du vitrage. De préférence, le système à cristaux liquides s'étend sur toute la surface du vitrage. Lorsque le système à diffusion lumineuse variable s'étend sur au moins une partie du vitrage, cette partie de la surface correspond et est de préférence alignée avec la zone Z comprenant un ensemble d'éléments diffusants discrets formant un motif (M). Le système à diffusion lumineuse variable peut donc être formé ou présent en regard d'une partie seulement ou de la totalité des surfaces principales externes du vitrage.

La couche d'éléments actifs de préférence à base de cristaux liquides est située entre deux d'électrodes, les électrodes étant en contact direct avec la couche d'éléments actifs de préférence à base de cristaux liquides. Les électrodes comprennent au moins une couche électroconductrice.

La couche électroconductrice peut comprendre des oxydes conducteurs transparents (TCO), c'est-à-dire des matériaux qui sont à la fois bon conducteurs et transparents dans le visible, tels que l'oxyde d'indium dopé à l'étain (ITO), l'oxyde d'étain dopé à l'antimoine ou au fluor (SnO₂ : F) ou l'oxyde de zinc dopé à l'aluminium (ZnO: Al). Une couche électroconductrice à base d'ITO présente une résistance surfacique de 50 à 200 ohms par carré.

Ces couches électroconductrices à base d'oxydes conducteurs sont de préférence déposées sur des épaisseurs de l'ordre de 50 à 100 nm.

La couche électroconductrice peut également être une couche métallique, de préférence une couche mince ou un empilement de couches minces, dites TCC (pour « Transparent conductive coating » en anglais) par exemple en Ag, Al, Pd, Cu, Pd, Pt In, Mo, Au et typiquement d'épaisseur entre 2 et 50 nm.

Ces couches électroconductrices peuvent être déposées directement sur un substrat ou sur une couche intermédiaire d'un substrat, par un grand nombre de techniques connues telles que la pulvérisation cathodique assistée par un champ magnétique, l'évaporation, la technique sol-gel, ainsi que des techniques de dépôt en phase vapeur (CVD).

Les électrodes comprenant une couche électroconductrice sont connectées à une alimentation en énergie. Les électrodes peuvent alors être déposées directement sur une face d'un substrat et ainsi former les substrats porteurs d'électrode.

Le vitrage comprend le substrat comportant un ensemble d'éléments diffusants discrets et au moins deux substrats porteurs d'électrodes. Le vitrage peut comprendre en outre d'autres substrats éventuellement feuilletés avec les substrats porteurs d'électrodes ou le substrat comportant un ensemble d'éléments diffusants discrets. Le ou les substrats, porteurs d'électrodes ou autres, peuvent être choisis rigides, semi-rigides ou flexibles, minéraux ou organiques, par exemple être en verre ou en polymère.

Lorsqu'un vitrage comporte plusieurs substrats, on entend par « face externe » la face d'un substrat tournée vers l'extérieur et « face interne » la face d'un substrat tournée vers l'intérieur du vitrage.

Les substrats en verre peuvent être choisis parmi les feuilles de verre plat flotté ou des feuilles de verre polies par exemple commercialisés par la société Saint-Gobain Glass dans la gamme DIAMANT® ou Planilux®. Les substrats en verre ont de préférence une épaisseur comprise entre 0,4 et 12 mm, de préférence 0,7 et 6 mm.

Les substrats en polymère peuvent comprendre des polymères choisis parmi les polyesters tels que le polyéthylène téréphtalate (PET), le polybutylène téréphtalate (PBT), le polyéthylène naphtalate (PEN) ; les polyacrylates tels que le polyméthacrylate de méthyle (PMMA) ; les polycarbonates ; les polyuréthanes ; les polyamides ; les polyimides ; les polymères fluorés et les polythiouréthanes. Ces substrats en polymère ont de préférence une épaisseur comprise entre 0,4 et 12 mm, de préférence 0,7 et 6 mm.

Les substrats en polymère peuvent également être des substrats flexibles tels que des intercalaires ou feuilles en matière plastique thermoformable ou sensible à la pression. Ces intercalaires peuvent être à base de polymères choisis parmi les polybutyrales de vinyle (PVB), les polychlorures de vinyle (PVC), les polyuréthanes (PU), les polyéthylènes téréphtalate ou les éthylènes vinyle acétate (EVA). Les intercalaire ont de préférence une épaisseur comprise entre 10 µm et 2 mm, de préférence comprise entre 0,3 et 1 mm.

Les substrats en polymère ou en verre peuvent être feuilletés entre eux grâce à l'utilisation de substrat de type intercalaires en matière plastique thermoformable ou sensible à la pression.

Les substrats situés de chaque côté du système à diffusion lumineuse variable correspondant en général aux substrats porteurs d'électrodes sont de préférence des substrats en verre, par exemple des feuilles de verre plat flotté.

Les substrats diffusants sont de préférence des substrats en verre, transparent, comportant un ensemble d'éléments diffusants discrets formant un motif.

Selon un mode de réalisation, un substrat porteur d'électrode peut également être un substrat comportant un ensemble d'éléments discrets diffusants formant un motif M. L'électrode et le motif peuvent être placés chacun sur une face différente du substrat. Alternativement, l'électrode et le motif peuvent être placés sur la même face d'un substrat.

Selon un mode de réalisation particulier de l'invention, les éléments diffusants discrets formant le motif M sont colorés, de préférence de couleur blanche. Le vitrage peut alors comprendre un substrat absorbant comportant un ensemble d'éléments absorbants discrets formant un motif M' identique et superposé au motif (M). Par conséquent, les éléments diffusants discrets formant le motif M et les d'éléments absorbants discrets formant un motif M' sont superposés.

La superposition des motifs M et M' peut être obtenue par utilisation d'un seul et même substrat absorbant et diffusant comprenant sur le motif M et le motif M' superposés, de préférence, sur la même face.

Selon ce mode de réalisation, les points blancs d'un côté du vitrage sont visibles ce qui permet la projection directe. Sur le côté opposé, les points noirs sont perçus par l'oeil de manière moins visible que des points blanc. Les points noirs sont donc moins gênants que des points blancs car ils confèrent une sensation de transparence plus forte.

L'invention a également pour objet un système de projection comprenant un vitrage utilisé comme écran de projection tel que défini dans la présente demande et un projecteur prévu pour éclairer le vitrage en projection.

L'invention concerne également l'utilisation d'un vitrage tel que défini ci-dessus comme écran de projection fonctionnant en réflexion ou de rétroprojection fonctionnant en transmission ainsi qu'un procédé de projection ou de rétroprojection selon lequel on dispose d'un vitrage tel que défini ci-dessus utilisé comme écran de projection ou de rétroprojection et d'un projecteur, ledit procédé consistant à projeter grâce au projecteur des images visibles par des spectateurs sur l'un des côtés du vitrage.

Le vitrage est de préférence utilisé comme un écran de projection fonctionnant en réflexion, c'est à dire que les spectateurs et le projecteur sont situés du même côté du vitrage utilisé comme écran de projection. Le vitrage peut toutefois être utilisé comme un écran de rétroprojection fonctionnant en transmission, c'est à dire que les spectateurs et le projecteur sont situés de chaque côté du vitrage. L'utilisation du vitrage ainsi défini comme écran de projection fonctionnant en réflexion permet d'améliorer le contraste et/ou la luminosité et/ou l'angle de vue.

Le système à diffusion lumineuse variable et le substrat d comportant un ensemble d'éléments diffusants discrets peuvent être assemblés par tous moyens connus tels que des moyens mécanique ou chimique. On peut notamment les assembler par feuilletage grâce à l'utilisation d'intercalaire de feuilletage ou en double vitrage.

L'invention sera mieux comprise à la lecture de la description qui va suivre, donnée uniquement à titre d'exemple, et faite en référence aux dessins annexés, sur lesquels :
- les figures 1a, 1b et 1c représentent respectivement un vue de côté et deux vues de face d'un substrat comprenant un motif selon l'invention,
- la figure 2 est une coupe transversale schématique d'un système de projection selon l'invention comprenant un projecteur et un vitrage conforme à un mode de réalisation selon l'invention.

Les dessins ne sont pas à l'échelle, pour une représentation claire, car les différences d'épaisseur entre les feuilles à fonction verrière et les autres couches sont importantes.

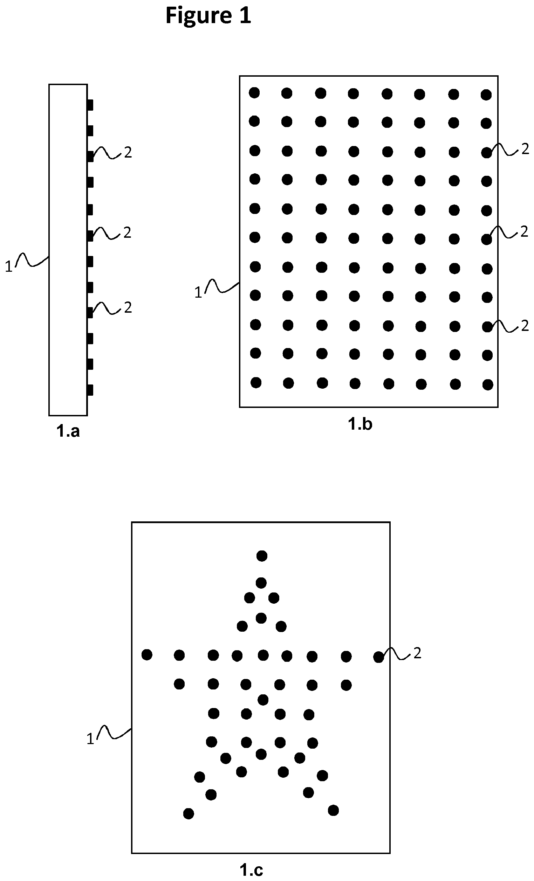

Les figures 1.a et 1.b représentent un substrat 1 comprenant un ensemble d'éléments diffusants discrets 2 formant un motif qui couvre une zone correspondant à toute la surface d'un substrat 1. Les éléments discrets 2 sont des disques. La figure 1.c représente un substrat 1 comprenant un ensemble d'éléments diffusants discrets 2 formant un motif présentant la forme d'une étoile qui couvre une zone correspondant à une partie de la surface d'un substrat 1. Les motifs correspondent à des réseaux de disques.

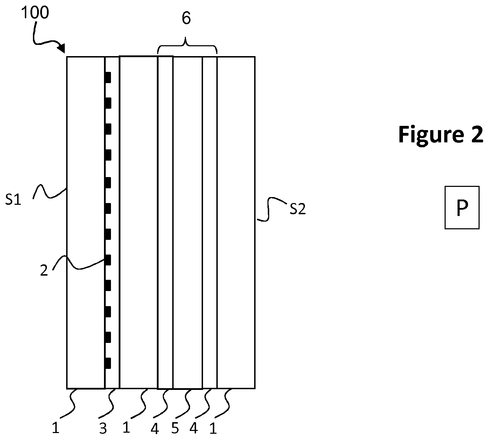

La figure 2 représente un projecteur P et un vitrage 100. Le vitrage selon l'invention est posé verticalement avec une première face ou face arrière orientée vers la gauche définissant une surface principale externe S1 et une seconde face ou face avant, opposée à la première face, orientée vers la droite définissant une surface principale externe S2.

Lorsque le vitrage est utilisé comme écran de projection, c'est-à-dire avec un spectateur côté projecteur P, la surface S2 délimite la face principale de l'écran, ainsi que le côté sur lequel est projetée une image provenant d'une source lumineuse. La surface S1 délimite la face opposée de l'écran.

Le vitrage comprend un système à diffusion lumineuse variable électrocommandable 6 pouvant commuter entre un état transparent et un état translucide.

Le vitrage illustré sur la figure 2 selon l'invention comprend l'empilement suivant :
- un substrat 1 comportant un ensemble d'éléments diffusants discrets 2 formant un motif situé sur la face interne du substrat, de préférence une feuille de verre,
- un intercalaire de feuilletage 3,
- un substrat 1, de préférence une feuille de verre porteur de l'une des électrodes du système à diffusion lumineuse variable,
- un système à diffusion lumineuse variable 6 comprenant de préférence une couche d'éléments actifs 5, susceptible de commuter entre un état transparent et un état diffusant, encadrée par deux électrodes 4,
- un substrat en verre 1, de préférence une feuille de verre porteur de l'une des électrodes du système à diffusion lumineuse variable.

L'intercalaire de feuilletage permet de fixer le substrat comportant un ensemble d'éléments diffusants discrets à l'un des substrats porteur d'électrode.

Au stade initial (état Off), c'est-à-dire avant l'application d'une tension électrique, la couche d'éléments actifs du système à diffusion lumineuse variable à cristaux liquides est translucide, c'est-à-dire qu'elle transmet optiquement mais n'est pas transparente. Dès que le courant est branché, la couche d'éléments actifs passe sous l'action du champ électrique alternatif à l'état transparent, c'est-à-dire celui permettant la vision à travers la couche d'éléments actifs.

Le vitrage selon l'invention peut être utilisé en façade ou comme cloison interne (entre deux pièces ou dans un espace) dans un bâtiment. Plus particulièrement, le vitrage de l'invention est particulièrement utile en tant que cloison interne de salle de réunion pour projeter des présentations. On peut commuter entre l'état transparent et l'état diffus.

Le vitrage selon l'invention est susceptible d'être utilisé pour toutes applications connues de vitrages, telles que pour véhicules, bâtiments, mobilier urbain, ameublement intérieur, éclairage, écrans d'affichage, etc. Le vitrage transparent de l'invention peut donc être utilisé en façade, en fenêtre, en cloison intérieure utilisable en écran de projection pour des salles de réunion ou des vitrines. Le vitrage peut également être utilisé pour de la muséographie ou de la publicité sur lieu de vente comme support publicitaire.

### Exemple

### I. Matériaux utilisés

### 1. Substrats et intercalaires

Les substrats transparents utilisés sont des verres Planilux® commercialisés par la société Saint-Gobain. Ces substrats ont une épaisseur de 4 mm.

Les substrats peuvent être feuilletés en utilisant par exemple un intercalaire en PVB ou en EVA.

Le substrat comportant un ensemble d'éléments discrets diffusants formant un motif est un substrat en verre sérigraphié comprenant un motif dont les éléments discrets diffusants sont des points (disques) de 400 µm de diamètre répartis de manière périodique sur le substrat. Le motif est donc constitué par un réseau de points. La surface de substrat recouverte par les éléments discrets constituant le motif représente 25 % de la surface totale du motif.

La pâte d'émail utilisée est une composition qui comporte en masse par rapport à la masse totale de la composition :
- 70 % d'une fritte de borate de zinc (indice optique ∼ 1,5),
- 30 % de particules d'alumine alpha (indice optique ∼ 1,76) et
- 30 % d'un milieu liant correspondant à un milieu de sérigraphie hydrosoluble.

Deux exemples de composition de frittes de verre sont donnés dans le tableau ci-dessous. La fritte de verre de verre de l'exemple 2 présente une résistance renforcée à l'humidité et un indice de réfraction élevé.

| | Ex 1 | Ex. 2 |
|---|---|---|
| SiO₂ | 12,1 | 3,8 |
| Al₂O₃ | 0,2 | 0,40 |
| B₂O₃ | 27,75 | 15,60 |
| Na₂O | 16,7 | 2,50 |
| K₂O | 0 | 0,80 |
| ZnO | 41,5 | 17,40 |
| Bi₂O₃ | 0 | 54,60 |
| ZrO₂ | 0,1 | 4,40 |
| F | 1,6 | 0 |
| Indice n₍₅₉₀ₙₘ₎ | 1,58 | 1,90 |

L'épaisseur de la couche de pâte d'émail déposée par sérigraphie sur le substrat est d'environ 40 µm (humide).

### 2. Vitrage incorporant un système à diffusion lumineuse variable (SDLV)

Le SDLV comprend une couche PDLC obtenue par séparation de phase induite par polymérisation radicalaire aux UV à partir du mélange de cristaux liquides commercialisé par la société Merck sous la référence MDA-00-3506 et d'une composition photopolymérisable en présence d'espaceurs. La composition photopolymérisable est obtenue à partir du produit MXM 035 commercialisé par Nematel®. Ce produit en deux parties A et B comprend :
- un mélange de deux monomères acrylates, l'éthylhexylacrylate et l'hexanediol diacrylate et d'oligomères acrylates (partie B),
- un mercaptan (partie A),
- un photoinitiateur pour sa polymérisation aux UV (partie A).

Les espaceurs sont des billes commercialisées sous la dénomination Sekisui Micropearl de 15 µm de dimension moyenne.

Les électrodes sont constituées d'une couche d'ITO d'environ 50 nm et de résistance environ 100 ohms par carré.

Pour obtenir un vitrage incorporant le SDLV, on réalise les étapes suivantes :
- une couche d'ITO est déposée par procédé magnétron sur un substrat en verre Planilux® ou Parsol® pour former un substrat porteur d'électrode,
- un joint de scellement à base d'une colle acrylate est appliqué en bordure du substrat en verre,
- la composition précurseur de la couche PDLC comprenant la composition photopolymérisable, le mélange de cristaux liquides et les espaceurs est déposée sur une électrode portée par un substrat,
- un deuxième substrat revêtu d'une électrode est déposé sur le premier substrat avec les deux couches conductrices des électrodes se faisant face et séparée par la couche de composition précurseur de la couche PDLC,
- les deux verres sont pressés ensembles,
- l'ensemble est insolé avec des rayons UV.

| **Couche Diffusante** | **SDLV** |
|---|---|
| **Technologie** | PDLC |
| Type de cristaux liquides | Nématique |
| Dimension moyennes des gouttelettes (µm) | 0,74 |
| Nature du polymère | acrylate |
| Proportions de mélange de cristaux liquides | 50-55 % |
| Epaisseur de la couche | 15 µm |

### 3. Vitrage de l'invention

Le substrat comportant un ensemble d'éléments diffusants discrets est feuilleté du côté de la face comprenant le motif à un substrat porteur d'électrode grâce à un intercalaire plastique.

La présence du motif comprenant des éléments diffusants situé le plus proche possible du vitrage incorporant le SDLV permet de minimiser le flou dû à une double image.

| **Empilement** | **Comp.1** | **Comp.2** | **Inv. 1** | **Inv.2** |
|---|---|---|---|---|
| Substrat | Couche diffusante continue | - | Couche diffusante avec motif | Couche diffusante avec motif |
| Intercalaire | - | - | PVB | - |
| Lame de gaz | - | - | - | Oui |
| Substrat | - | Oui | Oui | Oui |
| SDLV | - | SDLV | SDLV | SDLV |
| substrat | - | Oui | Oui | Oui |

### II. Evaluation de la qualité des écrans

### 1. Appréciation de l'aspect visuel à l'état diffusant OFF en tant qu'écran de projection

Un panel de plusieurs personnes a apprécié visuellement la luminosité des vitrages lorsqu'une image est projetée en projection directe à l'état diffusant. Le panel a attribué pour chaque image projetée sur un vitrage des indicateurs d'appréciation en fonction des critères évalués :
- transparence : «-» pas transparent, «+» bonne,
- luminosité : «-» moyenne, « 0 » correcte, «+» bonne,
- visibilité du motif : «-» visible, «+» non visible.

| Indicateur d'appréciation | Transparence | luminosité | visibilité du motif |
|---|---|---|---|
| Comp.1 | - | + | Pas de motif |
| Comp.2 | + | 0 | Pas de motif |
| Inv. 1 | + | + | + |

Le gain en luminosité est clairement observé en projection directe pour le vitrage de l'invention sans que le motif ne soit pour autant visible sur l'image projetée.

### 2. Appréciation de l'aspect visuel à l'état transparent ON en tant qu'écran de projection

Un panel de plusieurs personnes a apprécié visuellement la luminosité des vitrages lorsqu'une image est projetée en projection directe à l'état transparent. Le panel a attribué pour chaque image projetée sur un vitrage des indicateurs d'appréciation en fonction des critères évalués :
- luminosité : «-» moyenne, « 0 » correcte, «+» bonne,
- visibilité du motif : «-» visible, «+» non visible.

| Indicateur d'appréciation | Transparence | luminosité | visibilité du motif |
|---|---|---|---|
| Comp.1 | - | + | Pas de motif |
| Comp.2 | + | - | Pas de motif |
| Inv. 1 | + | + | + |

La projection est de bonne qualité en présence du motif sérigraphié tandis qu'elle est inutilisable autrement.

## Revendications

1. Vitrage comprenant deux surfaces principales externes (S1, S2) **caractérisé en ce qu'**il comporte :
- un système à diffusion lumineuse variable comprenant une couche à base d'éléments actifs, susceptible de commuter entre un état transparent et un état translucide,
- au moins deux substrats situés de chaque côté du système à diffusion lumineuse variable,
- au moins un substrat comportant un ensemble d'éléments diffusants discrets formant un motif (M) qui couvre une zone (Z), l'ensemble d'éléments diffusants discrets couvrant au plus 40% de l'aire de la zone (Z) couverte par le motif (M).

2. Vitrage selon la revendication 1 **caractérisé en ce que** le substrat comportant un ensemble d'éléments diffusants discrets et au moins un des substrats situés de chaque côté du système à diffusion lumineuse variable sont assemblés par feuilletage.

3. Vitrage selon la revendication 1 **caractérisé en ce que** le substrat comportant un ensemble d'éléments diffusants discrets et au moins un des substrats situés de chaque côté du système à diffusion lumineuse variable sont assemblés en double vitrage.

4. Vitrage selon l'une quelconque des revendications précédentes **caractérisé en ce que** le substrat comportant un ensemble d'éléments diffusants discrets comprend une face interne et une face externe, l'ensemble d'éléments diffusants discrets étant placé sur la face interne dudit substrat.

5. Vitrage selon la revendication 4 **caractérisé en ce que** le substrat comportant un ensemble d'éléments diffusants discrets comprend une face externe lisse.

6. Vitrage selon la revendication 4 ou 5 précédentes **caractérisé en ce que** une des surface principale externe du vitrage est confondue avec la face externe du substrat comportant un ensemble d'éléments diffusants discrets.

7. Vitrage selon l'une quelconque des revendications précédentes **caractérisé en ce que** les éléments discrets diffusants présentent une dimension latérale maximale comprise entre 1 µm et 5 mm.

8. Vitrage selon l'une quelconque des revendications précédentes **caractérisé en ce que** le motif formé d'un ensemble éléments distincts diffusants est choisi parmi :
- un film plastique diffusant discontinu,
- une couche diffusante discontinue,
- une texturation discontinue.

9. Vitrage selon la revendication 8 **caractérisé en ce que** la couche diffusante discontinue comprend une couche d'émail comprenant des particules minérales dispersées dans une matrice.

10. Vitrage selon l'une quelconque des revendications précédentes **caractérisé en ce que** le substrat comportant un ensemble d'éléments diffusants discrets est un substrat en verre.

11. Vitrage selon l'une quelconque des revendications précédentes **caractérisé en ce que** la couche à base d'éléments actifs est une couche à base de cristaux liquides comprenant un mélange de cristaux liquides formant des micro-gouttelettes dispersées dans une matrice polymère.

12. Vitrage selon l'une quelconque des revendications précédentes **caractérisé en ce que** les substrats situés de chaque côté du système à diffusion lumineuse variable sont des substrats en verre.

13. Vitrage selon l'une quelconque des revendications précédentes **caractérisé en ce qu'**il comprend l'empilement suivant :
- un substrat comportant un ensemble d'éléments diffusants discrets formant un motif situé sur la face interne du substrat,
- un intercalaire de feuilletage,
- un substrat en verre,
- un système à diffusion lumineuse variable,
- un substrat en verre.

14. Vitrage selon l'une quelconque des revendications précédentes **caractérisé en ce qu'**il comprend un substrat absorbant comportant un ensemble d'éléments absorbants discrets formant un motif (M') identique et superposé au motif M,

15. Procédé de projection ou de rétroprojection selon lequel on dispose d'un vitrage comprenant deux surfaces principales externes utilisé comme écran de projection ou de rétroprojection et d'un projecteur, ledit procédé consistant à projeter grâce au projecteur des images visibles par des spectateurs sur l'un des côtés du vitrage **caractérisé en ce que** le vitrage est tel que défini dans les revendications 1 à 14.

## Patentansprüche

1. Verglasung, die zwei äußere Hauptoberflächen (S1, S2) umfasst, **dadurch gekennzeichnet, dass** sie Folgendes umfasst:
- ein System mit variabler Lichtstreuung, das eine auf aktiven Elementen basierende Schicht umfasst und zwischen einem transparenten Zustand und einem transluzenten Zustand umschalten kann,
- mindestens zwei Substrate, die sich auf jeder Seite des Systems mit variabler Lichtstreuung befinden,
- mindestens ein Substrat, das eine Anordnung diskreter Streuelemente umfasst, die ein Muster (M) bilden, das eine Zone (Z) bedeckt, wobei die Anordnung aus diskreten streuenden Elementen mindestens 40 % der Fläche der durch das Muster (M) bedeckten Zone (Z) bedeckt.

2. Verglasung nach Anspruch 1, **dadurch gekennzeichnet, dass** das Substrat, das eine Anordnung diskreter streuender Elemente umfasst, und mindestens eines der Substrate, die sich auf jeder Seite des Systems mit variabler Lichtstreuungbefinden, durch Laminieren zusammengefügt sind.

3. Verglasung nach Anspruch 1, **dadurch gekennzeichnet, dass** das Substrat, das eine Anordnung diskreter streuender Elemente umfasst, und mindestens eines der Substrate, die sich auf jeder Seite des Systems mit veriabler Streuung befinden, als Doppelverglasung zusammengefügt sind.

4. Verglasung nach einem der vorhergehenden Ansprüche, **dadurch gekennzeichnet, dass** das Substrat, das eine Anordnung diskreter streuender Elemente umfasst,eine Innenseite und eine Außenseite umfasst, wobei die Anordnung diskreter streuender Elemente auf der Innenfläche des Substrats angeordnet ist.

5. Verglasung nach Anspruch 4, **dadurch gekennzeichnet, dass** das Substrat, das eine Anordnung diskreter streuender Elemente umfasst; eine glatte Außenfläche umfasst.

6. Verglasung nach dem vorhergehenden Anspruch 4 oder 5, **dadurch gekennzeichnet, dass** eine der äußeren Hauptoberflächen der Verglasung mit der Außenflächedes Substrats zusammenfällt, das eine Anordnung diskreter streuender Elemente umfasst.

7. Verglasung nach einem der vorhergehenden Ansprüche, **dadurch gekennzeichnet, dass** die diskreten streuenden Elemente eine maximale seitliche Abmessung zwischen 1 µm und 5 mm umfassen.

8. Verglasung nach einem der vorhergehenden Ansprüche, **dadurch gekennzeichnet, dass** das Muster, das von der Anordnung diskreter streuender Elemente gebildet wird, ausgewählt ist aus:
- einer diskontinuierlichen, streuenden Kunststofffolie,
- einer diskontinuierlichen, streuenden Schicht,
- einer diskontinuierlichen Texturierung.

9. Verglasung nach Anspruch 8, **dadurch gekennzeichnet, dass** die diskontinuierliche, streuende Schicht eine Emailschicht umfasst, die Mineralpartikel umfasst, die in einer Matrix verstreut sind.

10. Verglasung nach einem der vorhergehenden Ansprüche, **dadurch gekennzeichnet, dass** das Substrat, das eine Anordnung diskreter streuender Elemente umfasst, ein Substrat ist, das aus Glas besteht.

11. Verglasung nach einem der vorhergehenden Ansprüche, **dadurch gekennzeichnet, dass** die Schicht auf Basis aktiver Elemente eine Schicht, ist, die auf Flüssigkristallen basiert, die ein Gemisch von Flüssigkristallen umfasst, die Mikrotröpfchen bilden, die in einer Polymermatrix verstreut sind.

12. Verglasung nach einem der vorhergehenden Ansprüche, **dadurch gekennzeichnet, dass** die Substrate, die sich auf jeder Seite des Systems mit variabler Lichtstreuung befinden, Substrate aus Glas sind.

13. Verglasung nach einem der vorhergehenden Ansprüche, **dadurch gekennzeichnet, dass** sie die folgende Stapelung umfasst:
- ein Substrat, das eine Anordnung diskreter streuender Elemente umfasst, die ein Muster bilden, das sich auf der Innenfläche des Substrats befindet,
- eine Laminatzwischenlage,
- ein Substrat aus Glas,
- ein System mit variabler Lichtstreuung,
- ein Substrat aus Glas.

14. Verglasung nach einem der vorhergehenden Ansprüche, **dadurch gekennzeichnet, dass** sie ein absorbierendes Substrat umfasst, das eine Anordnung diskreter absorbierender Elemente umfasst, die ein Muster (M') bilden, das mit dem Muster M identisch ist und dieses überlagert.

15. Verfahren zur Projektion oder Rückprojektion, bei dem man über eine Verglasung, die zwei äußere Hauptoberflächen umfasst, die als Projektions- oder Rückprojektionsbildschirm verwendet werden, und über einen Projektor verfügt, wobei das Verfahren darin besteht, Dank dem Projektor Bilder, die für Zuschauer sichtbar sind, auf einer der Seiten der Verglasung zu projizieren, **dadurch gekennzeichnet, dass** die Glasscheibe wie in den Ansprüchen 1 bis 14 definiert ist.

## Claims

1. Glazing comprising two main external surfaces (S1, S2), **characterized in that** it comprises:
- a system with variable light scattering, comprising a layer which is based on active elements and can switch between a transparent state and a translucent state,
- at least two substrates located on either side of the system with variable light scattering,
- at least one substrate comprising a set of discrete scattering elements forming a pattern (M) which covers a zone (Z), the set of discrete scattering elements covering at most 40% of the area of the zone (Z) covered by the pattern (M).

2. The glazing as claimed in claim 1, **characterized in that** the substrate comprising a set of discrete scattering elements and at least one of the substrates located on either side of the system with variable light scattering are assembled by lamination.

3. The glazing as claimed in claim 1, **characterized in that** the substrate comprising a set of discrete scattering elements and at least one of the substrates located on either side of the system with variable light scattering are assembled as double glazing.

4. The glazing as claimed in any one of the preceding claims, **characterized in that** the substrate comprising a set of discrete scattering elements comprises an internal face and an external face, the set of discrete scattering elements being placed on the internal face of said substrate.

5. The glazing as claimed in claim 4, **characterized in that** the substrate comprising a set of discrete scattering elements comprises a smooth external face.

6. The glazing as claimed in claim 4 or 5, **characterized in that** one of the main external surfaces of the glazing coincides with the external face of the substrate comprising a set of discrete scattering elements.

7. The glazing as claimed in any one of the preceding claims, **characterized in that** the discrete scattering elements have a maximum lateral dimension of between 1 µm and 5 mm.

8. The glazing as claimed in any one of the preceding claims, **characterized in that** the pattern formed by a set of distinct scattering elements is selected from:
- a discontinuous plastic scattering film,
- a discontinuous scattering layer,
- discontinuous texturing.

9. The glazing as claimed in claim 8, **characterized in that** the discontinuous scattering layer comprises an enamel layer comprising inorganic particles dispersed in a matrix.

10. The glazing as claimed in any one of the preceding claims, **characterized in that** the substrate comprising a set of discrete scattering elements is a glass substrate.

11. The glazing as claimed in any one of the preceding claims, **characterized in that** the layer based on active elements is a layer based on liquid crystals, comprising a mixture of liquid crystals forming microdroplets dispersed in a polymer matrix.

12. The glazing as claimed in any one of the preceding claims, **characterized in that** the substrates located on either side of the system with variable light scattering are glass substrates.

13. The glazing as claimed in any one of the preceding claims, **characterized in that** it comprises the following stack:
- a substrate comprising a set of discrete scattering elements forming a pattern located on the internal face of the substrate,
- a lamination intermediate,
- a glass substrate,
- a system with variable light scattering,
- a glass substrate.

14. The glazing as claimed in any one of the preceding claims, **characterized in that** it comprises an absorbent substrate comprising a set of discrete absorbent elements forming an identical pattern (M') superimposed on the pattern M.

15. A method of projection or back-projection, according to which glazing comprising two main external surfaces, which is used as a projection or back-projection screen, and a projector are provided, said method consisting in using the projector to project images which can be seen by spectators onto one of the sides of the glazing, **characterized in that** the glazing is as defined in claims 1 to 14.
